Europäisches Patentamt

(19) European Patent Office

Office européen des brevets

(11) Publication number: **0 107 410**
**B1**

(12) **EUROPEAN PATENT SPECIFICATION**

(45) Date of publication of patent specification: 20.05.87

(51) Int. Cl.⁴: **G 01 N 21/27**

(21) Application number: **83305954.6**

(22) Date of filing: **30.09.83**

(54) Method of photometric measurement.

(30) Priority: **30.09.82 JP 171893/82**

(43) Date of publication of application:
**02.05.84 Bulletin 84/18**

(45) Publication of the grant of the patent:
**20.05.87 Bulletin 87/21**

(84) Designated Contracting States:
**DE FR GB NL**

(56) References cited:
**EP-A-0 049 561**
**DE-A-1 648 841**
**DE-A-3 110 803**

(73) Proprietor: **Kabushiki Kaisha Toshiba
72, Horikawa-cho Saiwai-ku
Kawasaki-shi Kanagawa-ken 210 (JP)**

(72) Inventor: **Minekane, Tomiharu c/o Patent
Division
Tokyo Shibaura Denki K.K. 72 Horikawa-cho
Saiwai-ku Kawasaki-shi Kanagawa-ken (JP)**
Inventor: **Yokotani, Noboru c/o Patent Division
Tokyo Shibaura Denki K.K. 72 Horikawa-cho
Saiwai-ku Kawasaki-shi Kanagawa-ken (JP)**
Inventor: **Onuma, Takehiko c/o Patent Division
Tokyo Shibaura Denki K.K. 72 Horikawa-cho
Saiwai-ku Kawasaki-shi Kanagawa-ken (JP)**

(74) Representative: **Kirk, Geoffrey Thomas et al
BATCHELLOR, KIRK & EYLES 2 Pear Tree Court
Farringdon Road
London EC1R 0DS (GB)**

Courier Press, Leamington Spa, England.

### Description

The present invention relates to a method of photometric measurement of the light absorption of liquid samples of the type used for determining the concentration of constituents thereof.

Photometric measurements are normally made by simply directing a light through a cell cuvette containing a fluid sample to be analysed. A portion of the light beam is absorbed by the sample and the remaining portion passes through the cuvette to a photodetector for measurement. By comparing the measurement obtained from the sample with a measurement obtained from a control fluid the concentration of the analysed sample can be calculated.

In particular the method relates to the photometric measurement of light absorption of liquid samples contained in a series of cells arranged in a cell carrier, which are successively conveyed by the carrier into the path of a light beam which is directed onto a radiation detector, and for use in a spectrophotometer and an automatic analysis apparatus.

A major source of error in such photometric apparatus lies in imperfections in the glass of plastic cuvettes. Very minor variations in a cuvette will substantially affect measurements made by the photodetector means, for example imperfections in the cuvette will cause variations in the light pathways through the cuvette.

In order to avoid the above-mentioned problem, it is known to use optically ground and polished glass or quartz, square-shaped cuvettes having at least two sides which are parallel surfaces of extremely high uniformity. However, such cuvettes are very expensive to manufacture, and the possibility remains of contamination between test samples due to improper cleaning. For this reason accuracy is normally sacrificed by using conventional cylindrical cuvettes which resemble test tubes. With these light pathways through the cylindrical cuvette change as the light beam laterally traverses the cross-sectional plane of the cuvette. When photometric apparatus is employed which passes light directly through the cylindrical cuvettes to a photodetector, substantial variation in light transmission results as the position of photometric measurement is changed laterally in the cross-sectional plane of the moving cuvette.

It has been suggested, see e.g. DE—A—1648841, to take an initial reading without a cuvette in the light pathway. It is known, e.g. from EP—A—0049561, to take a continuous, analogue measurement over a limited part of a cuvette, and to digitise that reading into a series of values; the limited part of the cuvette being determined by the length of notch in a band in front of the cuvette.

The present invention seeks to provide an improved photometric measurement method for use with cuvettes, e.g. cylindrical cuvettes.

According to the present invention, there is provided a method of photometric measurement of the light absorption of the contents of a cuvette including taking a series of readings of the light absorbtion as the cuvette moves at a predetermined rate through the path of a beam of light directed onto a light detector, comprising the steps of:

a. fixing the time intervals between the readings of the measurements of the light absorption as a function of the width of the cuvette, the predetermined rate of movement of the cuvette through the light path, and a desired number of readings;

b. making an initial reading of the light absorption in the light path before the cuvette enters the light path;

c. comparing the difference between the initial reading and successive readings with a first predetermined limit value which is less than a peak value corresponding to the leading wall of the cuvette, until the difference exceeds or is equal to the predetermined limit, indicating the arrival of a predetermined portion of the cuvette;

d. continuing taking readings until the desired number of readings is taken corresponding to the passage of the predetermined portion of the cuvette; and

e. selecting a measurement of light absorption corresponding to a desired part of the predetermined portion of the cuvette.

The method of the invention enables photometric measurement at a particular portion of a cuvette. By carrying the method for a control sample and then for a test sample two measurements may be obtained which when subtracted can give a measure of the light absorption for the test sample. Errors due to imperfection in the cuvette are thus overcome by repeating the measurement at the same part of the cuvette.

The method of the invention is particularly advantageous when utilised in a process wherein a series of cuvettes or similar cells are moved successively at a uniform speed, or uniformly accelerated speed, through a light beam.

A preferred embodiment of the invention will now be described with reference to the accompanying drawings, wherein:

Figure 1 is a schematic arrangement of an apparatus for use with the method of the preferred embodiment of the invention.

Figure 2 is a vertical section through a portion of the apparatus of Figure 1.

Figure 3 is a graph illustrating the change in the absorption of light through a cylindrical cuvette containing a liquid sample as the cuvette is moved laterally across a light beam.

Figures 4 and 5 taken together are a flow chart illustrating the generation of output values based on readings taken according to the preferred embodiment of the invention.

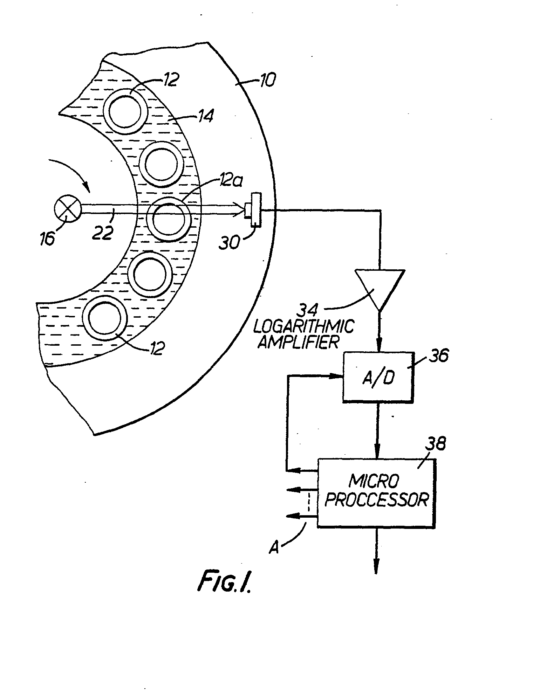

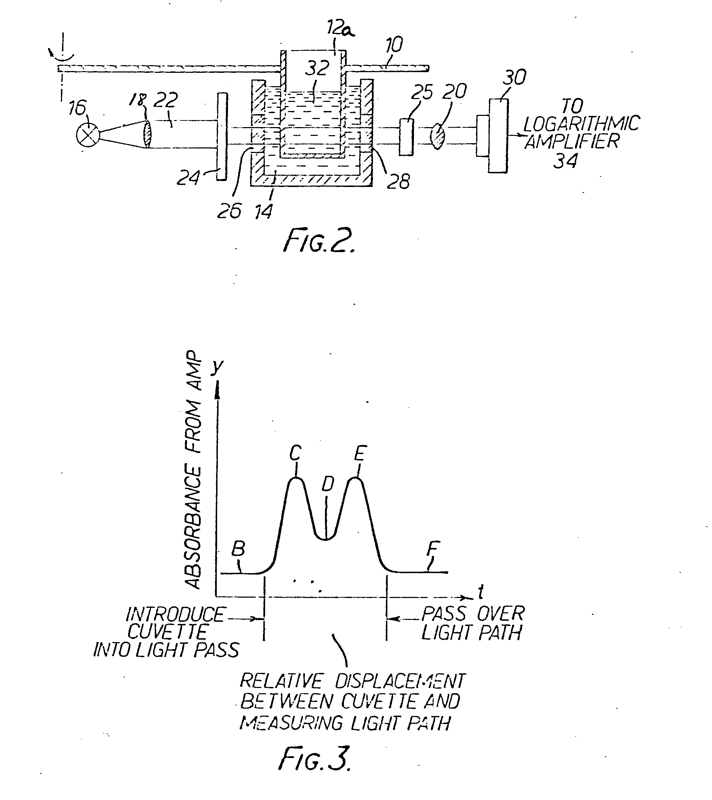

Referring to Figures 1 and 2, a photometric apparatus for use with the method of the invention, includes a cell carrier including a turntable 10 having a plurality of openings therein, into each of which a cylindrical cuvette 12 can be inserted. The cuvettes 12, as known, run in an annular thermostaticised liquid bath 14.

As may best be seen from Figure 2, and is conventional, a radiant energy source 16, which is positioned within the turntable 10, provides light which is formed into a beam 22 by lens 18. The beam 22 passes through an iris 24, through a window 26 in the bath 14, through the contents in a cuvette 12a, through a window 28 in the bath 14, and is focused by a lens 20 onto a detector 30. The detector 30 may be made sensitive to the particular wavelength by an appropriate filter 25.

An output of the detector 30 is connected to the input of a logarithmic amplifier 34, which is in turn connected to an analogue-to-digital (A/D) converter 36.

The output of A/D converter 36 is connected to a microprocessor 38 which includes a central processing unit (CPU), appropriate input/output (I/O) logic and a memory. The memory may include a read-only memory (ROM) and a random access memory (RAM).

The ROM memory will contain a series of computer instructions to be applied to control the CPU to provide signals through the I/O logic in a known manner. The RAM memory will be used to store the outputs from the A/D converter 36. Control signals A (Figure 1) from the microprocessor 38 control the various sub-assemblies and portions within the apparatus. The microprocessor 38 is arranged to provide periodic pulses to enable the A/D converter 36 to sample and hold instantaneous values supplied thereto from the amplifier 34. The A/D converter 36 may provide serial output.

In use, the cuvettes 12 contain one or more specific chemical re-agents mixed in solution with a specific amount of the sample being tested. Once cuvettes 12 have been placed in the openings in the turntable 10, the testing procedure begins after a specific time. Generally the radiant energy or light at a specific wavelength absorbed by each cuvette 12 and its contents is detected by detector 30 and an electrical signal having a magnitude proportional to that radiant energy absorption is applied to the logarithmic amplifier 34 within the apparatus.

Upon rotation of the turntable 10, the different cuvettes 12 are successively moved through the path of the light beam 22. In intermediate positions the light beam 22 passes between the cuvettes 12, so as to pass only through the bath 14.

The radiant energy absorption is measured at specific times determined by the signals provided from a clock circuit (not shown), which provides clock signals to sub-assemblies and portions within the apparatus. A/D converter 36 converts the analoque signal applied thereto to a two-byte digital signal in response to the enabling signal having the time interval T given by the following equation (1).

$$T = L/(V \times N) \qquad (1)$$

Where $L$ = the diameter of the cylindrical cuvette, $V$ = the speed of movement of the cuvette, $N$ = the number of samplings of optical density ($N \geqq 30$).

After the conversion is completed, analogue-to-digital converter 36 provides READY status signal. In response to the READY status signal, the two-byte digital signal is transferred to microprocessor 38 via I/O logic from the A/D converter 36.

The absorbed amount of light at the above-mentioned wavelength is a Beer's law function of the optical density of the reacted contents in the cuvette 12. The outputs of the A/D converter 36 are optical density signals each indicative of an optical density value at the measuring positions across the cuvette 12.

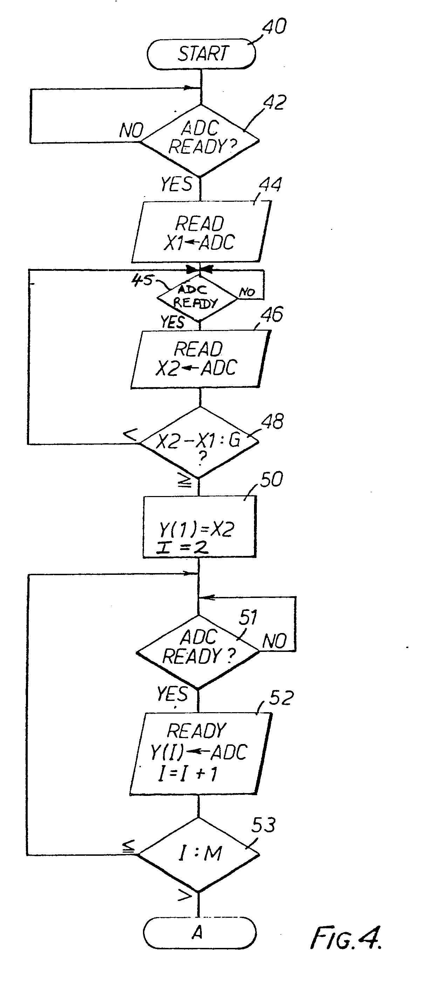

Figure 3 illustrates changes in the absorption of light through a cuvette containing a liquid sample as the cuvette transverses the light path 22. Portions B and F in Figure 3 shows the absorption when the light 22 passes only through the bath 14, portions C and E shows the light absorption as the light beam 22 passes through only the cuvette walls, and portion D shows the absorption as the light beam 22 passes through both the cuvette walls and the contents of the cuvette 12.

In general terms the method of the preferred embodiment of the invention is as follows; measurements are taken of the light absorption of the cuvette and its contents at precisely timed intervals as the cuvette passes through the light beam at a predetermined rate of motion; a determination is made that the leading wall of the cuvette is passing through the light beam by comparing the differences between an initial reading through the bath only and subsequent reading with a preselected limit G until the difference exceeds the preselected limit G which is less than the peak value of the readings of the leading wall. Since the diameter of the cuvette, the rate of movement of the cuvette, and the desired number of readings is known, the time intervals between readings can be calculated and the position of each reading, with respect to the cuvette, precisely determined.

Referring now to Figure 4, a flow diagram of the computer program controlling microprocessor 38 immediately after the application of power will be described. At block 40 the processor 38 provides a code indicative of the photometric measurement being performed. At block 42, it is determined whether the A/D converter 36 is ready. If so, at blocks 44 and 46, a mean value X of a plurality of the absorption values taken is provided from A/D converter 36. The difference between an initial reading $X_1$ and a following reading $X_2$, i.e. $(X_2 - X_1)$ is obtained; the reading $X_1$ being for portion B of the absorption characteristic as shown in Figure 3, and $X_2$ being a subsequent reading.

At block 48, it is determined whether the difference $(X_2 - X_1)$ exceeds a preselected limit G which is less than the peak value corresponding to portion C, shown in Figure 3, for example the absorbance of 10 m ABS. If the difference does not exceed the preselected limit G the procedure returns to block 45 and the comparison of the difference $(X_2 - X_1)$ with G is repeated until the condition at block 48 for procedure to block 50 is met.

When the difference $(X_2—X_1)$ is greater than or equal to G the procedure moves on to block 50 where the value $X_2$ is stored as the first of a set of readings Y, i.e. as Y(1). At block 51 it is determined whether A/D converter 36 is ready and, if so, at block 52 a further reading subsequent to the reading $X_2$ at block 50 is taken from the A/D converter, ADC in Figure 4, and is stored in the memory as Y(2). At block 53, it is determined whether the number I of the readings transferred to the memory of microprocessor 38 is greater than a predetermined constant M.

The constant M is given by the following equation (2).

$$M = (S \times L)/(V \times T) \qquad (2)$$

Where S = the safety coefficient which is equal to 1.2, L = the diameter of the cylindrical cuvette, V = the rate of movement of the cuvettes, and T is given by equation (1).

Both blocks 51 and 52 are repeated until the number of the transferred readings I is greater than M.

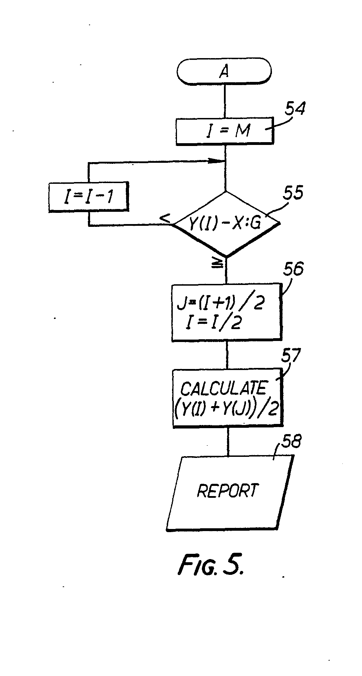

Block 53 leads to junction point A which is also marked in Figure 5 to indicate the continuation of the procedure. Operation proceeds to block 54 at which the end reading of acquisition values is accessed from the memory in response to the constant M. The difference between the initial reading $X_1$ and the value Y(M) accessed from the memory is obtained. At block 55 it is determined whether this difference $(Y(M)—X_1)$ exceeds or is equal to the preselected value G. If not the difference between other values Y(I − 1), etc. (I = M), are taken and compared with G until the condition to proceed to block 56 is met. I is the subscript of the Y value.

At block 56 the value of I of reading Y(I) corresponding to the trailing wall of the cylindrical cuvette is used to calculate the subscripts I and J indicative of the central portion of the cuvette. At block 57 the light absorptions, and thus the optical density value, corresponding to the central portion of the cuvette, is calculated from data Y(I) and Y(J). An output is provided at block 58. Other portions of the cuvette may be used, but the central portion is preferred. Optical density values of samples contained in the cuvette can be obtained based on distances from either wall of the cuvette.

The procedure detailed above makes it possible for measurement of light absorption to be obtained repeatedly for a particular portion of a cuvette. Thus, by filling a cuvette with a control sample, e.g. pure water, and obtaining the light absorption measurement of the cuvette and control sample, a 'standard' or control measurement is established. This 'standard' measurement can be subtracted from a measurement of light absorption obtained for the same cuvette and a sample to be analysed, to provide a value of the light absorption relative to the control sample. By selecting the control sample to have neutral light absorption with respect to test sample absorption the result obtained will indicate the light absorption for the test sample alone. It will be appreciated that errors due to imperfections in the cuvette are eliminated by subtracting results established for the same portion of the cuvette, and that it is the procedure described above with reference to Figures 4 and 5 which makes this possible.

Since the measurements are taken at specific times, as measured by the clock circuit, it is a simple matter for anyone skilled in the art to have the computer select the measurements for a particular cuvette for use in the measurement of the absorption of the light by the reacted sample and thereby the density of the sample.

With the photometric measurement method of the present invention, the variations in the cuvettes 12 which affect light transmission are overcome by the photometric measurement method herein described. It has been found that reproducible results are obtained under this method using inexpensive conventional cylindrical cuvettes.

Spectral analysis may be done if a diffraction grating replaces the interference filter 25.

**Claims**

1. A method of photometric measurement of the light absorption of the contents of a cuvette (12) including taking a series of readings of the light absorption as the cuvette (12) moves at a predetermined rate through the path of a beam of light (22) directed onto a light detector (30), comprising the steps of:

a. fixing the time intervals between the readings of the measurements of the light absorption as a function of the width of the cuvette (12), the predetermined rate of movement of the cuvette (12) through the light path (22), and a desired number of readings;

b. making an initial reading of the light absorption (B) in the light path (22) before the cuvette (12) enters the light path (22);

c. comparing the difference between the initial reading (B) and successive readings with a first predetermined limit value which is less than a peak value (C) corresponding to the leading wall of the cuvette (12), until the difference exceeds or is equal to the predetermined limit, indicating the arrival of a predetermined portion of the cuvette (12);

d. continuing taking readings until the desired number of readings is taken corresponding to the passage of the predetermined portion of the cuvette (12); and

e. selecting a measurement of light absorption (D) corresponding to a desired part of the predetermined portion of the cuvette (12).

2. A method as claimed in claim 1, wherein the desired number of readings is sufficient to cover the trailing wall of the cuvette (12), and the step (e) includes determining which of the readings corresponds to a predetermined part of the trailing wall, and selecting the measurement corresponding to the desired part of the cuvette (12) from the readings taken before the passage of that part of the trailing wall.

3. A method as claimed in claim 2, wherein the predetermined part of the trailing wall is determined by comparing the difference between readings and said initial reading with a second predetermined limit value which is less than a peak value (E) corresponding to the trailing wall of the cuvette (12), regressively from the last reading taken until the difference exceeds the predetermined limit, indicating the predetermined part of the trailing wall.

4. A method as claimed in claim 3, wherein the first predetermined limit value for the leading wall limit and the second predetermined limit value for the trailing wall are the same.

5. A method as claimed in claim 4, wherein the measurement (D) corresponding to the desired part of the cuvette (12) is selected from readings taken midway between the determination that said difference between readings exceeds or equals the leading wall limit value and determination that said difference exceeds or equals the trailing wall limit value.

6. A method as claimed in any one of claims 1 to 5, wherein the selected measurement of light absorption is obtained by averaging the measurements for two adjacent readings.

7. A method as claimed in any preceding claim including the step of converting the output from the detector into digital form at predetermined times throughout the period of measurement of light absorption by the cuvette (12).

8. A method as claimed in any preceding claim including storing said width of the cuvette (12), predetermined rate of movement of the cuvette (12), the required number of readings, the predetermined limit or limits in the memory of a microprocessor (38) and making the required calculations in the microprocessor.

9. A method as claimed in any preceding claim wherein a plurality of cuvettes (12) are arranged in a movable cuvette (12) carrier (10), and the cuvettes (12) move through a thermostaticised bath, or a like bath (14), and the initial reading is taken through the bath (14).

10. A method of photometric measurement of the light absorption of the contents of a cuvette (12) moving at a predetermined rate through the path (22) of a beam of light directed onto a light detector (30) comprising: step (a) as defined in any preceding claim, carrying out steps (b)—(e) as defined in any preceding claim for a cuvette (12) containing a control sample, repeating steps (b)—(e) for the same cuvette (12) containing a test sample to be analysed, and subtracting the measurement of step (e) for the control sample from the measurement of step (e) for the test sample to obtain a measurement of the light absorption of the test sample alone.

**Patentansprüche**

1. Verfahren zur photometrischen Messung der Lichtabsorption des Inhalts einer Küvette (12), bei dem eine Reihe von Ablesungen der Lichtabsorption durchgeführt wird, während die Küvette (12) mit einer vorbestimmten Geschwindigkeit durch einen Lichtstrahl (22) hindurchbewegt wird, der auf einen Lichtdetektor (30) gerichtet ist, gekennzeichnet durch folgende Verfahrensschritte:

a) Festlegung der Zeitintervalle zwischen den Ablesgungen der Messungen der Lichtabsorption als eine Funktion der Breite der Küvette (12), der vorbestimmten Bewegungsgeschwindigkeit der Küvette (12) durch den Lichtweg (22) und einer gewünschten Zahl von Ablesungen,

b) Durchführung einer Anfangsablesung der Lichtabsorption (B) in dem Lichtweg (22), bevor die Küvette (12) in den Lichtweg (22) eintritt,

c) Vergleich der Differenz zwischen der Anfangsablesung (B) und den nachfolgenden Ablesungen mit einem ersten vorbestimmten Grenzwert, der geringer ist als ein Spitzenwert (C), der der vorderen Wandung der Küvette (12) zugeordnet ist, bis die Differenz den vorbestimmten Grenzwert übersteigt oder gleich diesem Wert ist, wodurch das Ankommen eines vorbestimmten Abschnitts der Küvette (12) angezeigt wird,

d) Fortsetzung des Durchführens von Ablesungen, bis die gewünschte Zahl von Ablesungen erreicht ist entsprechend dem Durchgang des vorbestimmten Abschnitts der Küvette (12), und

e) Auswahl einer Lichtabsorptionsmessung (D), die einem gewünschten Teil des vorbestimmten Abschnitts der Küvette (12) zugeordnet ist.

2. Verfahren nach Anspruch 1, dadurch gekennzeichnet, daß die gewünschte Ablesungszahl ausreicht, die hintere Wandung der Küvette (12) mit abzudecken, und daß beim Verfahrensschritt e) bestimmt wird, welche der Ablesungen einem vorbestimmten Teil der hinteren Wandung entspricht, und daß die dem gewünschten Teil der Küvette (12) entsprechende Messung aus den Messungen ausgewählt wird vor Durchgang des Teiles der hinteren Wandung.

3. Verfahren nach Anspruch 2, dadurch gekennzeichnet, daß der vorbestimmte Teil der hinteren Wandung durch Vergleich der Differenz zwischen den Ablesungen und der Angangsablesung mit einem zweiten vorbestimmten Grenzwert ermittelt wird, der kleiner ist als der Spitzenwert (E), der der hinteren Wandung der Küvette (12) entspricht, indem von der letzten Ablesgung zurückgegangen wird, bis die Differenz den vorbestimmten Grenzwert überschreitet, wodurch der vorbestimmte Teil der hinteren Wandung angezeigt wird.

4. Verfahren nach Anspruch 3, dadurch gekennzeichnet, daß der erste vorbestimmte Grenzwert für die vordere Wandung und der zweite vorbestimmte Grenzwert für die hintere Wandung gleich sind.

5. Verfahren nach Anspruch 4, dadurch gekennzeichnet, daß die dem ausgewählten Teil der Küvette (12) entsprechende Messung (D) aus Ablesungen ausgewählt wird, die zwischen der Feststellung, daß die Differenz zwischen den Ablesungen den Vorderwandgrenzwert übersteigt oder gleich diesem Wert ist, und der Feststellung, daß diese Differenz den Rückwandgrenzwert übersteigt oder gleich diesem Wert ist, erfolgen.

6. Verfahren nach einem der Ansprüche 1 bis 5, dadurch gekennzeichnet, daß die ausgewählte Lichtabsorptionsmessung durch Mittelung der Meßergebnisse zweier aufeinanderfolgender Ablesungen gewonnen wird.

7. Verfahren nach einem der vorhergehenden Ansprüche, dadurch gekennzeichnet, daß das Ausgangssignal des Detektors zu vorbestimmten Zeiten während der Lichtabsorptionsmessung an der Küvette (12) digitalisiert wird.

8. Verfahren nach einem der vorhergehenden Ansprüche, dadurch gekennzeichnet, daß die Breite der Küvette (12), die vorbestimmte Bewegungsgeschwindigkeit der Kuvette (12), die geforderte Zahl an Ablesungen, der vorbestimmte Grenzwert oder die vorbestimmten Grenzwerte im Speicher eines Mikroprozessors (38) abgespeichert werden, und daß die erforderlichen Berechnungen in dem Mikroprozessor durchgeführt werden.

9. Verfahren nach einem der vorhergehenden Ansprüche, dadurch gekennzeichnet, daß eine Vielzahl von Küvetten (12) in einem bewegbaren Küvettenträger (10) angeordnet sind, und daß die Küvetten (12) durch ein thermostatgeregeltes Bad oder ähnliches Bad (14) bewegt werden, und daß die Anfangsablesung durch das Bad (14) hindurch erfolgt.

10. Verfahren zur photometrischen Messung der Lichtabsorption des Inhalts einer Küvette (12), die mit einer vorbestimmten Geschwindigkeit durch den Weg (22) eines Lichtstrahles bewegt wird, der auf einen Lichtdetektor (30) gerichtet ist, mit dem Verfahrensschritt (a) gemäß einem der vorhergehenden Ansprüche, wobei die Verfahrensschritte (b)—(e) für eine eine Kontrollprobe enthaltende Küvette (12) nach einem der vorhergehenden Ansprüche durchgeführt werden, die Verfahrensschritte (b)—(e) für die gleiche Küvette (12) mit einer zu analysierenden Testprobe wiederholt werden, und wobei die Messung gemäß Verfahrensschritt (e) für die Kontrollprobe von der Messung gemäß Verfahrensschritt (e) für die Testprobe abgezogen wird, um eine Lichtabsorptionsmessung der Testprobe allein zu erhalten.

**Revendications**

1. Procédé pour mesurer par voie photométrique le taux d'absorption de la lumière du contenu d'une coupelle consistant à effectuer une série de mesures de ce taux d'absorption pendant que la coupelle se déplace à une vitesse prédéterminée en coupant le trajet d'un faisceau lumineux dirigé sur un photodétecteur, qui consiste:

a) à fixer les intervalles de temps entre les lectures des mesures du taux d'absorption de la lumière en fonction de la largeur de la coupelle (12), la vitesse prédéterminée du mouvement de la coupelle (12) à travers le trajet lumineux (22) et le nombre désiré de lectures des résultants;

b) à effectuer une mesure initiale (B) du taux d'absorption de la lumière avant que la coupelle (12) coupe le trajet (22) de la lumière;

c) à comparer la différence entre la mesure initiale (B) et les résultats des mesures successives avec une première valeur limite prédéterminée qui est inférieure à une certaine valeur de pointe (C) correspondant à la paroi antérieure de la coupelle (12), jusqu'à ce que cette différence soit supérieure ou égale à ladite limite prédéterminée, indiquant ainsi l'arrivée d'une partie prédéterminée de la coupelle (12);

d) à continuer à relever les résultats des mesures jusqu'à ce que le nombre voulu de mesure correspondant au passage de la partie prédéterminée de la coupelle (12) a été obtenu; et,

e) à sélectionner un résultat de mesure du taux d'absorption de la lumière (D) correspondant à une partie voulue de la partie prédéterminée de la coupelle (12).

2. Procédé selon la revendication 1, caractérisé en ce que le nombre voulu de mesures est suffisant pour couvrir la paroi arrière de la coupelle (12), et en ce que l'étape (e) consiste également à déterminer laquelle des mesures correspond à la partie prédéterminée de la paroi arrière, et à sélectionner le résultat correspondant à la partie désirée de la coupelle (12) parmi les résultats obtenus avant le passage de cette partie de la paroi arrière.

3. Procédé selon la revendication 2, caractérisé en ce qu'on détermine la partie prédéterminée de la paroi arrière en comparant les différences entre les résultats des mesures et le résultat de la mesure initiale avec une seconde valeur limite qui est inférieure à une certaine valeur de pointe (E) correspondant à la paroi arrière de la coupelle (12), en régressant à partir de la dernière mesure effectuée, jusqu'à ce que la différence dépasse la limite prédéterminée, indiquant ainsi la partie prédéterminée de la paroi arrière.

4. Procédé selon la revendication 3, caractérisé en ce que la première valeur limite prédéterminée pour la limite de la paroi antérieure, et la seconde valeur limite prédéterminée pour la paroi arrière sont les mêmes.

5. Procédé selon la revendication 4, caractérisé en ce qu'on choisit le résultat de mesure (D) correspondant à la partir voulue de la coupelle (12) à mi-chemin entre la détermination que ladite différence entre les mesures dépasse ou est égale à la valeur limite de la paroi antérieure et la détermination que cette différence dépasse ou est égale à la valeur limite de la paroi arrière.

6. Procédé selon l'une quelconque des revendications 1 à 5, caractérisé en ce qu'on obtient la mesure sélectionnée du taux d'absorption de la lumière en faisant la moyenne de deux résultats de mesures adjacents.

7. Procédé selon l'une quelconque des revendications précédentes, caractérisé en ce qu'on transforme les signaux de sortie du détecteur en informations numériques à des instants prédéterminés pendant la période de mesure du taux d'absorption de la lumière par la coupelle (12).

8. Procédé selon l'une quelconque des revendications précédentes, caractérisé en ce qu'on conserve ladite largeur de la coupelle (12), la vitesse prédéterminée du mouvement de la coupelle (12), le nombre voulu de résultats de mesures, la ou les limites prédéterminées, dans la mémoire d'un microprocesseur (38) et on effectue les calculs nécessaires dans celui-ci.

9. Procédé selon l'une quelconque des revendications précédentes, caractérisé en ce qu'un certain nombre de coupelles (12) sont disposées dans un support mobile (10), lesdites coupelles (12) se déplaçant dans un bain à régulation thermostatique ou analogue (14), et en ce qu'on effectue la mesure initiale à travers ledit bain (14).

10. Procédé pour mesurer par voie photométrique le taux d'absorption de la lumière par le contenu d'une coupelle (12) se déplaçant à une vitesse prédéterminée à travers le trajet (22) d'un faisceau lumineux dirigé sur un détecteur (30) qui comprend:

une étape (a) telle que définie dans l'une quelconque des revendications précédentes, l'exécution des étapes (b)—(e) telles que spécifiées dans l'une quelconque des revendications précédentes avec une coupelle (12) contenant un échantillon témoin ou de contrôle, à répéter les étapes (b)—(e) avec la même coupelle (12) contenant un échantillon d'essai devant être analysé, et à soustraire les résultats de la mesure de l'étape (e) de l'échantillon témoin du réultat de la mesure de l'étape (e) de l'échantillon d'essai afin d'obtenir une mesure du taux d'absorption de la lumière par l'échantillon d'essai seul.

FIG.I.

FIG.2.

INTRODUCE
CUVETTE
INTO LIGHT PASS

PASS OVER
LIGHT PATH

RELATIVE DISPLACEMENT
BETWEEN CUVETTE AND
MEASURING LIGHT PATH

FIG.3.

FIG.4.

FIG. 5.